# FASCICULE DE BREVET EUROPEEN

(11) **EP 0 430 822 B1**
(45) Date de publication et mention de la délivrance du brevet: **28.07.1993**
(21) Numéro de dépôt: 90420451.8
(22) Date de dépôt: 18.10.1990
(51) Int. Cl.: B62D 13/00

(54) **Train d'essieux autovireurs pour véhicules agraires, routiers, de chantiers et autres véhicules analogues**
Selbstlenkende Achsen für landwirtschaftliche Fahrzeuge, Strassenfahrzeuge, Baumaschinen und gleichartige Fahrzeuge
Self-steering axles for agricultural vehicles, road vehicles, construction machines and other similar vehicles

(30) Priorité: 20.11.1989 FR 8915446
(43) Date de publication de la demande: 05.06.1991
(73) Titulaire: Tonarelli, Giovanni, F-69130 Ecully (FR)
(72) Inventeur: Tonarelli, Giovanni, F-69130 Ecully (FR)
(74) Mandataire: Schmitt, John

(56) Documents cités:
- EP-A- 0 287 463
- BE-A- 545 890
- DE-B- 1 001 600
- FR-A- 2 304 486
- FR-A- 2 518 950
- US-A- 2 851 280

## Description

La présente invention a pour objet un train d'essieux pour véhicules agraires, routiers, de chantiers et autres véhicules analogues, pouvant interrompre leur parallélisme lors des virages et devenir autovireurs. Ce type d'essieu, tel que défini dans les préambules des revendications 1 et 9, est connu par exemple de FR-A-2304486.

Les essieux autovireurs ont pour rôle d'économiser les pneumatiques, les suspensions et la chaussée, en éliminant le ripage au sol.

Les essieux autovireurs actuellement connus, du genre à chapes-axes-fusées, sont complexes, fragiles, de fabrication onéreuse et réclament un entretien fréquent, ce qui en compromet leur fiabilité. Le brevet FR-A-2518950 décrit des essieux autovireurs de ce type.

Les essieux autovireurs selon l'invention sont simples, de fonctionnement pratique, rationnel et complémentaire.

Prévu pour équiper des remorques, semi-remorques, camions et tout autre véhicule routier, de chantier ou agraire, même sous forme de maquettes, ce train d'essieux se caractérise par le fait qu'il consiste en l'accouplement d'au moins deux essieux dont l'un est susceptible de coulisser dans un fourreau de glissement latéral rendu solidaire du châssis, comme celui décrit par le brevet FR-A-2304486, ledit essieu étant associé au second essieu par une flèche-timon de manière qu'il l'entraîne dans ses déplacements pour faire pivoter ledit second essieu monté sous une couronne à billes, pour obtenir en roulant et lors des virages, des braquages autodirectionnels.

La revendication 9 a pour objet un train d'essieu du même type utilisant un autre moyen de liaison entre les deux essieux.

L'invention est exposée ci-après plus en détail à l'aide de dessins représentant seulement un mode d'exécution.

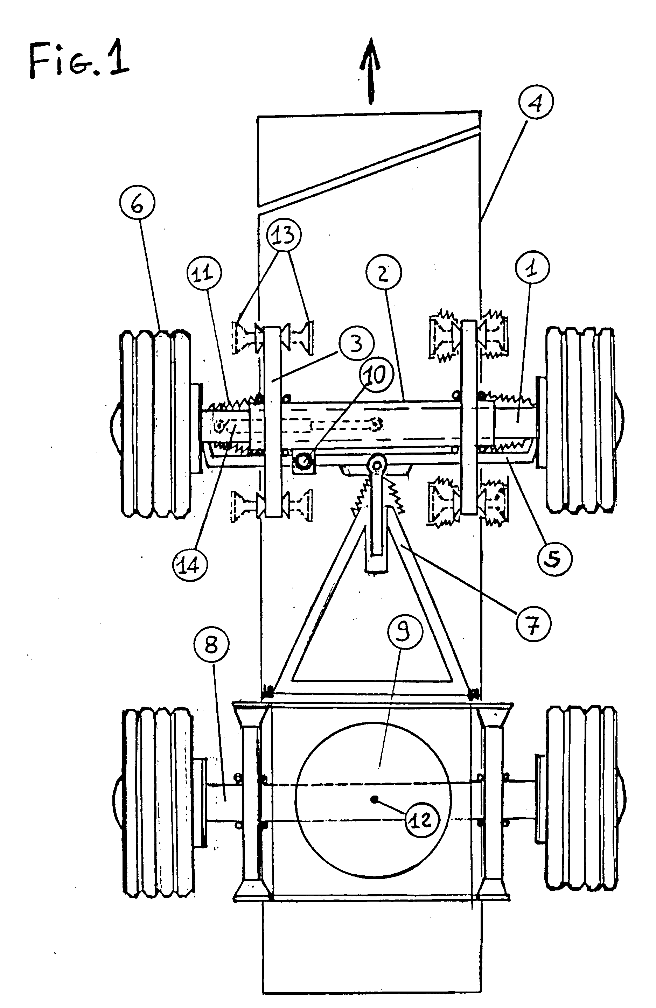

La figure 1 montre un train d'essieux selon l'invention placé sous le châssis d'un véhicule roulant en ligne droite.

La figure 2 montre le comportement du train d'essieux pendant un virage à gauche.

La figure 3 montre le comportement du train d'essieux pendant un virage à droite.

La figure 4 représente un train d'essieux dans lequel le second essieu est directionnel.

Sur les dessins, le repère 1 désigne un essieu ordinaire recouvert d'un fourreau 2 sur lequel viennent se brider les suspensions 3 fixées au châssis 4 du véhicule.

Facilité dans son glissement par des plaques de téflon et des points de graissage, ce fourreau 2, qui est moins large que l'essieu 1 qu'il recouvre, a une marge de déplacement sur celui-ci de plusieurs centimètres vers le côté droit, ou vers le côté gauche, lors des virages du véhicule.

Un bras 5 extérieur au fourreau 2, attaché aux extrémités de l'essieu 1, très près des roues 6, sert d'ancrage médian au timon télescopique 7 du second essieu 8.

Le second essieu 8 est retenu sous le châssis 4 par une couronne à billes 9 ou tout autre système et par des suspensions 3. La couronne 9 pivote autour d'un axe 12 d'accouplement aux châssis 4.

Des soufflets 11 protègent les surfaces glissantes de l'essieu 1 et du timon 7.

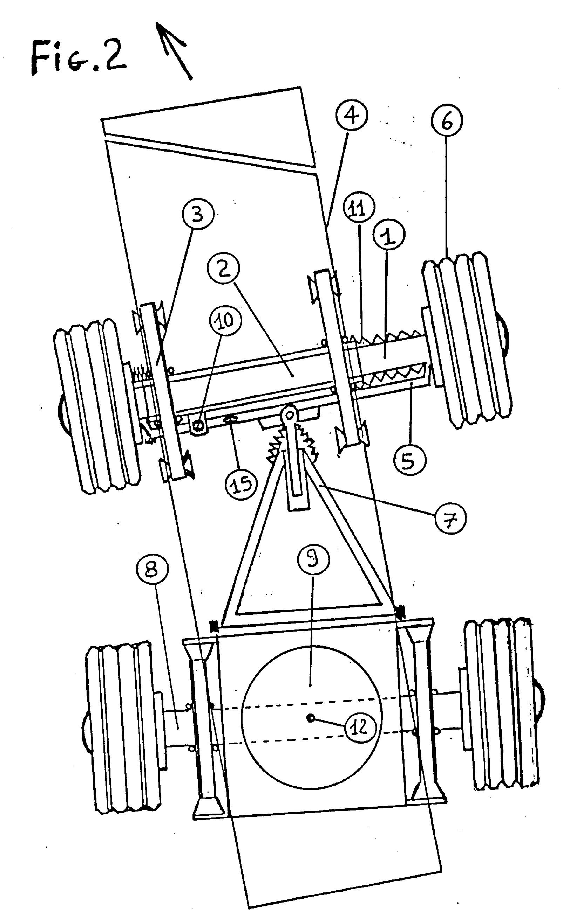

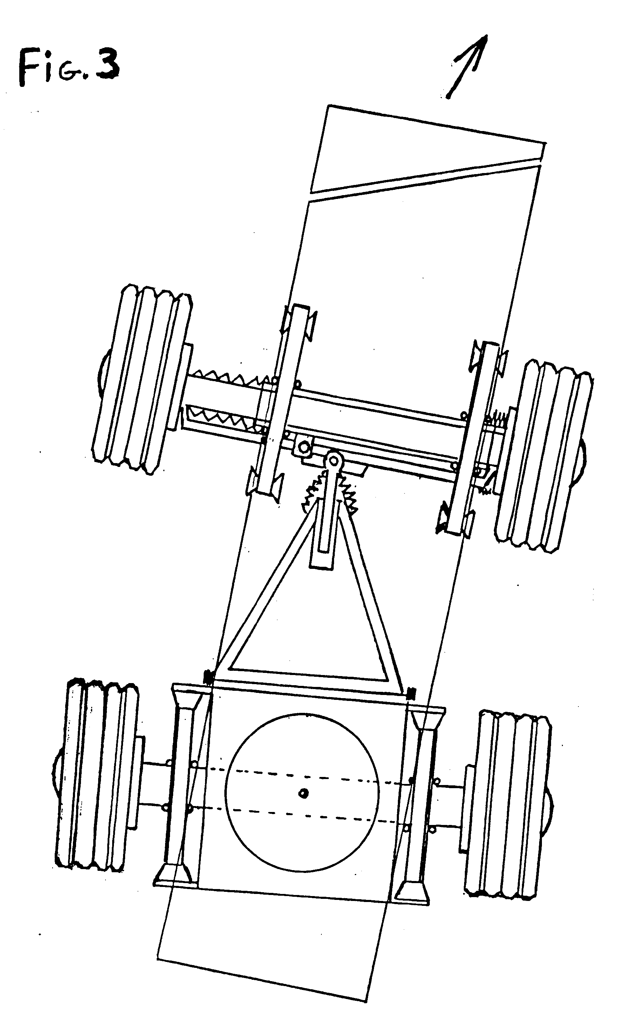

Comme l'illustrent les figures 2 et 3, le fonctionnement de ce train d'essieux de nature différente est provoqué par la possibilité de glissement du fourreau 2 sur le corps d'essieu 1.

En effet, l'essieu 1, excentré par rapport aux châssis 4, se trouve cependant braqué sans ripage au sol des roues 6. L'essieu 8, libre de pivoter, contrôlé par son timon 7 ancré au bras 5 ne retrouve le parfait alignement avec l'essieu 1 et le châssis 4, que lorsqu'il a remonté ledit châssis 4 vers l'extérieur du virage.

A ce moment l'essieu 8 a retrouvé le parallélisme avec l'essieu 1 et le fonctionnement s'achève ainsi pour pouvoir recommencer à l'infini.

Dans le cas d'une semi-remorque, cette façon de remonter vers l'arrière permet de calquer les traces des roues du véhicule tracteur.

Un vérin 10 de bloquage est prévu pour annuler, si nécessaire, le coulissement entre l'essieu 1 et le fourreau 2. Le fonctionnement autovireur est alors stoppé et les essieux 1 et 8 sont utilisés à la manière fixe traditionnelle.

Le diamètre de perçage du bras 5 est plus important que le diamètre de l'axe 15 du vérin 10. Ce montage, non seulement facilite l'enclenchement du système bloquant, mais également laisse au timon 7 le jeu nécessaire pour la recherche constante du parallélisme entre les deux essieux 1 et 8, le mauvais parallèlisme étant la préoccupation des utilisateurs parce qu'il provoque l'usure des pneus.

Lors de la marche arrière les essieux 1, 8 peuvent être manoeuvrés et braqués dans le sens voulu par le chauffeur, ou ils peuvent être bloqués par celui-ci au moyen du vérin 10.

Il est important de préciser que les déplacements fourreau-essieu peuvent être provoqués par un système différent pouvant se situer au niveau des suspensions 3 et des axes de chapes 13 qui sont, dans ce cas, plus larges que les lames 3 desdites suspensions.

Un amortisseur 14 peut être utilisé pour absorber les éventuelles vibrations de l'essieu 1 et du timon 7.

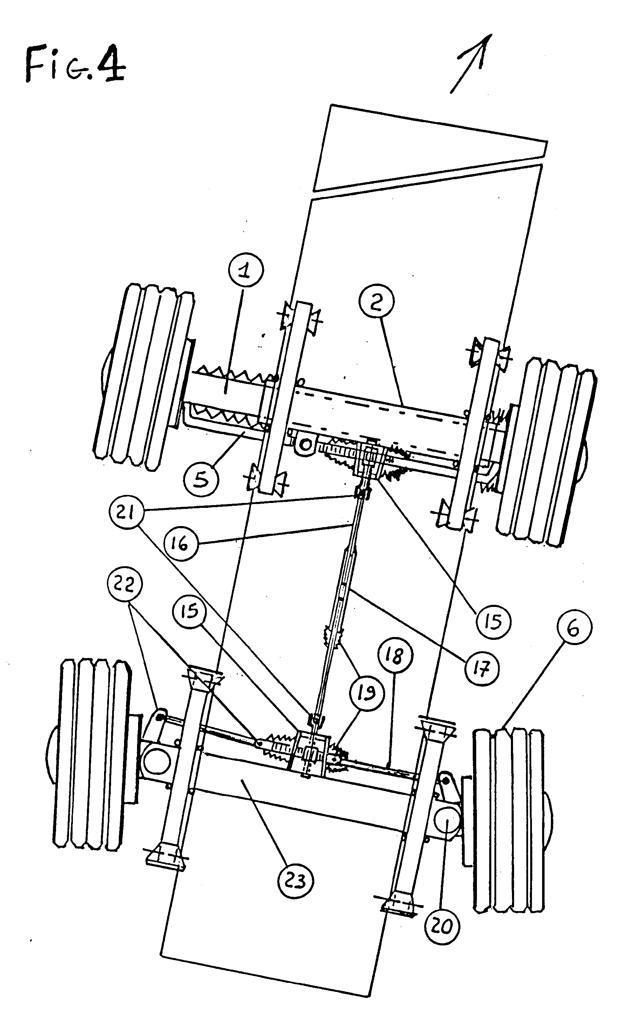

Dans une autre version illustrée figure 4 et pour obtenir un braquage des roues 6 plus important, le train est constitué d'essieux différents. En effet, si le premier essieu 1 et son bras de mouvement 5 présente les caractéristiques décrites précédemment il reçoit, pour commander le braquage du second essieu 23, un boîtier de direction 15 à crémaillère et pignon.

Les fusées avec axes 20 du second essieu 23 sont accouplées entre elles par des tirants 18 retenus par des rotules 22 permettant le braquage simultané des roues 6. Un second boîtier 15 à crémaillère et pignon équipe la partie médiane de l'accouplement par les tirants 18.

Une colonne de direction 16 sert de transmission entre les boîtiers 15 des deux essieux 1 et 23.

Un joint télescopique 17 et un croisillon 21 ont pour rôle d'absorber les changements de niveau des essieux 1 et 23.

Des soufflets 19 protègent les organes mobiles de ce train d'essieux.

On comprend aisément que le mouvement latéral de l'essieu 1 entraîne la rotation de la colonne de direction 16 et, par conséquent, le braquage des roues 6 du second essieu 23 et procure le fonctionnement autovireur à ce train d'essieux.

## Revendications

1. Train d'essieux autovireurs pour véhicules agraires, routiers, de chantiers et autres véhicules analogues, comportant au moins deux essieux (1,8) dont l'un (1) est susceptible de coulisser dans un fourreau (2) solidaire du châssis (4) du véhicule de façon à pouvoir se déplacer transversalement par rapport audit châssis, caractérisé par, le fait que le premier essieu (1) est associé au second essieu (8) par une flèche-timon (7) l'entraînant dans ses déplacements pour faire pivoter ledit second essieu (8) monté sous une couronne à billes (9) tournant sur un axe (12), pour obtenir en roulant et lors des virages, des braquages autodirectionnels.

2. Train d'essieux autovireurs selon la revendication 1, caractérisé par le fait qu'un bras de mouvement (5) est fixé aux deux extrémités de l'essieu (1) et se déplace avec lui, à l'extérieur du fourreau (2), pour servir, en son milieu, d'ancrage directionnel à la flèche-timon (7).

3. Train d'essieux autovireurs selon la revendication 1, caractérisé par le fait que des suspensions (3), rattachées au châssis (4) et ancrées au fourreau (2), entraînent ce dernier vers la droite, ou vers la gauche, lors des virages, mais pas l'essieu (1), ce qui évite, de ce fait, le ripage au sol des pneus, tout en braquant les roues (6) dans le sens du virage.

4. Train d'essieux autovireurs suivant la revendication 1, caractérisé par le fait que l'essieu suiveur (8) n'obéit pas au pivotement du châssis (4), lors des virages, mais remonte l'arrière dudit châssis jusqu'à l'alignement parfait avec l'essieu (1) qui le précède, provoquant le recentrage de celui-ci et la recherche permanente de l'alignement.

5. Train d'essieux autovireurs suivant la revendication 1, caractérisé par le fait que la flèche-timon (7) est télescopique pour s'allonger librement lors des virages.

6. Train d'essieux autovireurs suivant les revendications 1 et 2, caractérisé par le fait qu'il est conduisible en marche arrière, mais qu'il peut être aussi bloqué, si nécessaire, par l'axe (15) d'un vérin (10) qui traverse, dans ce cas, le perçage de plus grand diamètre du bras (5) pour faciliter l'enclenchement du système et laisser le jeu nécessaire à la recherche constante du parallèlisme des deux essieux (1,8), même si l'ensemble autovireur se trouve bloqué, ou incomplètement bloqué.

7. Train d'essieux autovireurs suivant la revendication 1, caractérisé par le fait que le déplacement du châssis (4) par rapport à l'essieu fixe (1) est aussi obtenu en procurant aux lames de ressorts des suspensions (3), des axes de chapes (13) suffisamment larges pour permettre le déplacement dudit châssis.

8. Train d'essieux autovireurs suivant la revendication 1, caractérisé par le fait qu'un amortisseur (14) absorbe les vibrations éventuelles de l'essieu (1) et de la flèche-timon (7).

9. Train d'essieux autovireurs comportant au moins deux essieux (1,23) dont l'un est susceptible de coulisser dans un fourreau (2) solidaire du châssis du véhicule de façon à pouvoir se déplacer transversalement par rapport audit châssis, caractérisé par le fait que le premier essieu (1) commande, par le déplacement d'un bras de mouvement (5) à crémaillère entraînant la rotation du pignon d'une colonne de direction télescopique (16) reliée à un second boîtier de direction (15), le braquage des roues du second essieu (23) par l'intermédiaire d'un tirant (18).

## Patentansprüche

1. Selbstschwenkender Achssatz für Landwirtschafts-, Straßenbau-, Bau- und ähnliche Maschinen mit mindestens zwei Achsen (1, 8), von denen eine (1) in einer fest mit dem Rahmen (4) des Fahrzeugs verbundenen Gleithülse (2) hin und her gleitet, sodaß sie quer zur Längsachse des Fahrzeugrahmens bewegt werden kann, dadurch gekennzeichnet, daß die erste Achse (1) über eine Deichsel (7) mit einer zweiten Achse (8) verbunden ist, die über einen sich um eine Drehachse (12) drehenden Kugellagerkranz (9) befestigt ist und beim Fahren von der ersten Achse derart beeinflußt wird, daß beim Kurvenfahren eine Selbslenkung erfolgt.

2. Selbstschwenkender Achssatz nach Patentanspruch 1, dadurch gekennzeichnet, daß ein Lenkarm (5) an beiden Enden der Achse (1) befestigt ist und sich mit dieser außerhalb der Gleithülse (2) bewegt, um in seiner Mitte als Verankerungspunkt für die Deichsel (7) zu dienen.

3. Selbstschwenkender Achssatz nach Patentanspruch 1, dadurch gekennzeichnet, daß die am Rahmen (4) befestigten Aufhängungen (3) an der Gleithülse (2) befestigt ist und diese - jedoch nicht die Achse (1) - bei Kurvenfahrt nach links oder rechts verlagert, wodurch eine Abnutzung der Reifen beim Einschlagen der Räder (6) in Kurvenrichtung verhindert wird.

4. Selbstschwenkender Achssatz nach Patentanspruch 1, dadurch gekennzeichnet, daß die nachgesteuerte Achse (8) bei Kurvenfahrt nicht den Schwenkbewegungen des Fahrzeugrahmens (4) folgt, sondern daß sich die Rückseite des Fahrzeugrahmens nach der Vorderachse (1) ausrichtet, wodurch letztere wieder in Mittelstellung gerät und ständig dazu neigt, die Ausrichtung einzuhalten.

5. Selbstschwenkender Achssatz nach Patentanspruch 1, dadurch gekennzeichnet, daß die Deichsel (7) ausziehbar ist, um in Kurven frei beweglich zu sein.

6. Selbstschwenkender Achssatz nach Patentanspruch 1 und 2, dadurch gekennzeichnet, daß er in Rückwärtsfahrt lenkbar ist, jedoch auch - falls erforderlich - durch die Achse (15) eines Stellantriebes (10) blockiert werden kann, der in diesem Falle die Bohrung mit größerem Durchmesser in dem Arm (5) durchquert, um ein Einrasten des Systems zu erleichtern und genügend Spiel zu gewährleisten, das zum ständigen Bemühen um nach Parallelität der beiden Achsen (1, 8) erforderlich ist, selbst wenn der Selbstschwenksatz ganz oder teilweise blockiert ist.

7. Selbstschwenkender Achssatz nach Patentanspruch 1, dadurch gekennzeichnet, daß die Verlagerung des Fahrzeugrahmens (4) gegenüber der festen Achse (1) auch dadurch erreicht wird, daß die Blattfedern mit Aufhängungen (3) versehen werden, deren Achsen (13) breit genug sind, um die Verlagerung des Fahrzeugrahmens zuzulassen.

8. Selbstschwenkender Achssatz nach Patentanspruch 1, dadurch gekennzeichnet, daß ein Stoßdämpfer (14) zum Auffangen eventueller Schwingungen von Achse (1) und Deichsel (7) vorgesehen ist.

9. Selbstschwenkender Achssatz mit mindestens zwei Achsen (1? 23), von denen eine in einer fest mit dem Fahrzeugrahmen verbundenen Gleithülse versehen ist, sodaß diese Achse sich quer zur Längsrichtung des Fahrzeugrahmens verlagern kann, dadurch gekennzeichnet, daß die erste Achse (1) durch Verlagern eines Zahnstangenarms (5) und damit Drehen des Zahnrades eines ausziehbaren, mit einem zweiten Lenkkasten (15) verbundene Lenksäule (16) den Einschlag der Räder der zweiten Achse (23) über einen Zugstab (18) steuert.

## Claims

1. Set of self-gear turning axles for land, heavy road, site and other similar vehicles and comprising at least two axles (1, 8), one axle (1) being able to slide into a sheath (2) integral with the chassis (4) of the vehicle so as to be able to move transversally with respect to said chassis, wherein the first axle (1) is associated with the second axle (8) by an arrow link (7) driving it when moving so as to make said second axle, mounted under a ball ring (9) rotating on a spindle (12), move in order to obtain self-directional steerings when moving and cornering.

2. Set of self-gear turning axles according to claim 1, wherein a movement arm (5) is fixed to the two extremities of the axle (1) and, along with it, moves outside the sheath (2) so as to be used at its middle as an anchorage directional to the arrow link (7).

3. Set of self-gear turning axles according to claim 1, wherein suspensions joined to the chassis (4) and anchored to the sheath (2) drive the latter towards the right or left during cornering but not the axle (1) which, owing to this, prevents the tires from skidding on the ground whilst steering the wheels (6) in the direction of the corner.

4. Set of self-gear turning axles according to claim 1, wherein the tracking axle (8) does not follow pivoting of the chassis (4) when cornering, but moves up the back of said chassis until it is perfectly aligned with the axle (1) preceding it, thus provoking recentering of the latter and a permanent checking of alignment.

5. Set of self-gear turning axles according to claim 1, wherein the arrow link (7) is telescopic so as to freely extend at the time of cornering.

6. Set of self-gear turning axles according to claims 1 and 2, wherein it is able to be driven backwards, but it may also be locked, if required, by the spindle (15) of a jack (10) which in this case traverses the bore with the largest diameter of the arm (5) so as to facilitate locking-in of the system and leave the amount of clearance required for constant checking of the parallelism of the two axles (1, 8), even if the self-gear turning unit is blocked or partly locked.

7. Set of self-gearing turning axles according to claim 1, wherein the movement of the chassis (4) with respect to the fixed axle (1) is also obtained by procuring the spring leaves of the suspensions (3) with clevis pins (13) sufficiently wide so as to allow for movement of said chassis.

8. Set of self-gearing turning axles according to claim 1, wherein a damper (14) absorbs any possible vibrations of the axle (1) and the arrow link (7).

9. Set of self-gearing turning axles comprising at least two axles (1, 23), one of said axles being able to slide into a sheath (2) integral with the chassis of the vehicle so as to be able to move transversally with respect to said chassis, wherein the first axle (1), via the movement of a rack movement arm (5) actuating rotation of the gear of a telescopic steering column connected to a second steering gear housing, controls steering of the wheels of the second axle (23) by means of a tie rod (18).
